(19) Europäisches Patentamt
European Patent Office
Office européen des brevets

(11) Publication number: **0 293 478**
**A1**

(12) **EUROPEAN PATENT APPLICATION**
published in accordance with Art. 158(3) EPC

(21) Application number: **87907137.1**

(51) Int.Cl.³: **A 01 B 63/112**

(22) Date of filing: **30.10.87**

Data of the international application taken as a basis:

(86) International application number:
**PCT/JP87/00835**

(87) International publication number:
**WO88/02982 (05.05.88 88/10)**

(30) Priority: **30.10.86 JP 259427/86**

(43) Date of publication of application:
**07.12.88 Bulletin 88/49**

(84) Designated Contracting States:
**DE FR GB**

(71) Applicant: **ISEKI & CO., LTD.**
**700, Umakicho Matsuyama-shi**
**Ehime 799-26(JP)**

(72) Inventor: **TAMAI, Seishin**
**Isekinoki Kabushiki Kaisha Gijutsubu**
**1, Yakura Tobe-cho Iyo-gun Ehime 791-11(JP)**

(72) Inventor: **DOI, Yoshinori**
**Isekinoki Kabushiki Kaisha Gijutsubu**
**1, Yakura Tobe-cho Iyo-gun Ehime 791-11(JP)**

(72) Inventor: **ARAKI, Masakatu**
**Isekinoki Kabushiki Kaisha Gijutsubu**
**1, Yakura Tobe-cho Iyo-gun Ehime 791-11(JP)**

(74) Representative: **Grams, Klaus Dieter, Dipl.-Ing. et al,**
**Patentanwaltsbüro Tiedtke-Bühling-Kinne-**
**Grupe-Pellmann-Grams-Struif-Winter-Roth Bavariaring 4**
**D-8000 München 2(DE)**

(54) **VERTICAL MOVEMENT CONTROL APPARATUS FOR AGRICULTURAL MACHINES.**

(57) A draft control apparatus for lifting and lowering an agricultural machine, such as a plow, which is attached to a tractor via a hydraulic lift unit, in such a manner that a plowing depth set in advance by a plowing depth setting device in accordance with an increase and decreased in the traction resistance detected by a draft sensor can be attained. When the lift unit for the agricultural machine is shifted from a lifting position to a lowering side, the agricultural machine is lowered suddenly with the draft control operation interrupted for a predetermined short period of time or by a predetermined short distance. When the relation between a detected value from the draft sensor and a set value from the plowing depth setting device is not on the agricultural machine lowering side, this sudden lowering operation is not carried out. Therefore, when the agricultural machine is lowered, it is driven into the earth excellently, and, moreover, it does not float above the ground surface after it has been driven into the earth.

EP 0 293 478 A1

./...

FIG.1

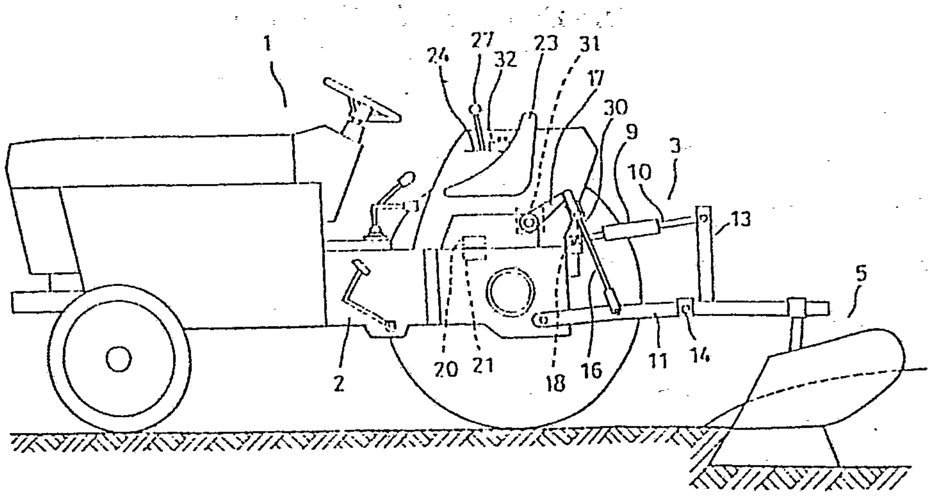

TITLE OF THE INVENTION

Lifting control device of agricultural machine

SUMMARY OF THE INVENTION

[Industrial Field of Utilization]

This invention relates to a lifting control device of an agricultural machine for tilling by mounting a working machine such as plow on a tractor.

[Prior Art]

The agricultural machine for tilling work by linking a plow to a tractor having a hydraulic device for lifting and lowering the working machine through a link mechanism generally possesses a draft control function for moving up or down the plow depending on increase or decrease of traction resistance, and a tilling depth setter for setting the tilling depth in a specified range. The draft control is intended to detect the load applied to the link by a draft sensor provided on the top link of a link mechanism, and lift or lower the plow by the hydraulic device to keep this detected value within a preset range determined by the tilling depth setter, thereby adjusting the tilling depth.

When lowering the plow, meanwhile, it is effective to perform a so-called plowing-in control, that is, to open the hydraulic value fully to lower the working machine suddenly, in order to bite into the soil favorably, but when the tilling depth setting by the tilling depth setter is shallow, the plow was lifted above from the farm field, depending on the type of the plow, when the draft operation was started after the plowing-in control. In this case, if the plow was lifted above the farm, the operator often continued work without noticing this state.

To solve the above-discussed problems, this invention is composed as follows.

This invention presents a lifting control device of an agricultural machine, which mounts a plow or other working machine on a tractor by way of a hydraulic lifting device, and controls the draft for moving up or down the working machine to be adjusted to the tilling depth predetermined by a tilling depth setter depending on the increase or decrease of traction resistance detected by a draft sensor, possessing a plowing-in control function for suddenly lowering the working machine by stopping the draft control function for a specified short time when the working machine lifting device is changed from the ascending position to the descending side, and designed to stop temporarily said plowing-in control function when the relation between the detected value by said draft sensor and the preset value by the tilling depth setter is not at the working machine lowering side.

When lowering the working machine from the raised position to the working position, the draft sensor value at this time, and the tilling depth set value are compared, and if a command to lower the working machine is not issued, it is designed not to perform plowing-in control, so that the accidental uplifting of the plow above the farm land after plowing-in control may be prevented.

As clear from the description herein, the lifting control device of the agricultural machine of this invention is designed to compare the draft sensor value and the set value when lowering the working machine from the raised position to the working position, and inhibit the plowing-in control for quick lowering by fully opening the lowering side valve when a command to lower the working machine is not issued, so that it is possible to prevent the trouble of travelling while the working machine once lowered is being lifted above the farm.

BRIEF DESCRIPTION OF THE DRAWINGS

Fig. 1 is a side view of an example of a tilling agricultural machine relating to this invention,

Fig. 2 and Fig. 6 are block diagrams showing the control mechanism of hydraulic equipment,

Fig. 3 is a explanatory chart of tilling depth setter,

Fig. 4 and Fig. 5 are flow charts showing the control action.

DETAILED DESCRIPTION

Referring now to the drawings, one of the embodiments of this invention is described below.

Fig. 1 refers to an embodiment of an agricultural machine relating to this invention, in which this agricultural machine 1 has a link mechanism 3 disposed in the rear part of tractor 2, and a plow is mounted on this link mechanism 3 as a working machine.

The link mechanism 3 has one top link 10 possessing a turnbuckle for expansion and contraction (or a hydraulic cylinder) 9, and a pair of right and left lower links 11, 11, and the top link 10 is attached to a mast 13 of the plow 5, and the lower links 11, 11 to the right and left sides of a horizontal frame 14 of the plow 5. The lower links 11, 11 are suspended on a hydraulic lift arm 17 of the tractor 2 by lift rods 16, 16 linked to the middle thereof. At the base part of the top link 10, a balancing spring 18 is fitted, and the top link 10 is supported in the state being pulled to the carbody by this spring 18. The tension of the balancing spring 18 may be properly selected depending on the type of the plow to be mounted.

The tractor 2 is furnished with a hydraulic device of electric-hydraulic type capable of controlling the flow rate of the working fluid by a pair of proportional solenoid valves 20, 21 for lifting and lowering, and by the oil pressure of this hydraulic device, various hydraulic cylinders are expanded and contracted, while the lift arm 17 is turned up and down. A position lever 27 is disposed on an operation console 24 at the side of a driver's seat 23, and when it is placed in the UP side, the solenoid valve 20 for lifting is actuated to turn the lift arm 17 upward, and when the same lever is placed in the DOWN side, the solenoid valve 21 for lowering is actuated to turn the lift arm 17 downward. Besides, this agricultural machine 1 has an up/down switch 28 as a means of plow lifting means, and by this switch it is designed to move the link mechanism up and down to a specified position.

As a detecting device for controlling the traction force and tilling depth of the plow by the tractor, a draft sensor 30 for detecting the load applied to the link is disposed on the top link 10, while a lift arm angle sensor 31 for detecting the turning angle of the lift arm is provided at the base part of the lift arm 17. Furthermore, as a setting device for the tilling depth, a tilling depth setter 32 is provided in said operation console 24. The tilling depth setter 32 is of dial type as shown in Fig. 3, and graduations 34 from 0 to 255 and ranges A, B, C to show the working range for each plow are marked around the dial 33. For example, range A is for triple reversible plow of heavy weight, range B for dual plow of medium weight, and range C for single plow of light weight.

When working, the draft control is in effect, and the valves 20, 21 of the hydraulic device are properly changed over so that the detected value of said draft sensor 30 may be equal to the value preset by the dial 33 of the tilling depth setter, and the plow 5 is lifted or lowered. When lowering the plow 5 from the raised position to the working position, plowing-in control is in effect, and said draft control is temporarily stopped for a specified time (usually 2 to 3 seconds), and the plow 5 is lowered while the valve 21 for lowering is in fully open state. In this way, by setting high the lowering speed of the plow 5, the impact when the plow lands on the ground becomes larger, and it is possible to sink the plow blade securely to the desired depth in a short time. Besides, this lifting control device is designed so that said plowing-in control is ineffective while the relation of the detected value of the draft sensor 30 and the tilling depth set value is not in the "lowering" mode. Fig. 4 is a flow chart of this plowing-in control. Since the plowing-in control is inhibited thus depending on the relation between the detected value of the draft sensor 30 and the tilling depth set value, it is possible to prevent the job error of uplifting of the working machine after the plowing-in control even if the tilling depth is set very shallow.

Meanwhile, in this lifting control device of the agricultural machine 1, when lowering the plow 5 to the working position by an up/down switch 28, as shown in Fig. 5, if the indication of the dial 33 of the tilling depth setter 32 is away from the working region, it is also effective to constitute so that the plow 5 may not be lowered. In this case, when the dial 33 is set again in the working region, the plow 5 is allowed to go down.

In this setting, when it is desired to lower the plow to the working region by using the up/down switch 28, if the setting of the tilling depth by the tilling depth setter is not proper, the plow is designed not to descend, which makes it possible to prevent the job error of continuing to run while the operator is not aware of the fact that the plow once lowered is lifted above the farm and is not tilling.

Furthermore, as shown in Fig. 6, by composing to control the proportional solenoid valve by the CPU by means of position lever 27, lift arm angle sensor 31, tilling depth setter 32, and tilling depth sensor 40 for detecting the tilling depth, it is also effective to prevent job error due to lifting of the working machine above the farm by setting so that the down function of the up/down switch 28 may be ineffective when the setting of the tilling depth setter is smaller than the shallowest set position of the tilling depth sensor 40.

WHAT IS CLAIMED IS:

1. A lifting control device of an agricultural machine, which mounts a plow or other working machine on a tractor by way of a hydraulic lifting device, and controls the draft for moving up or down the working machine to be adjusted to the tilling depth predetermined by a tilling depth setter depending on the increase or decrease of traction resistance detected by a draft sensor, possessing a plowing-in control function for quick lowering the working machine by stopping the draft control function for a specified short time or a specified short distance when the working machine lifting device is changed from the ascending position to the descending side, and designed to stop temporarily said plowing-in control function when the relation between the detected value by said draft sensor and the preset value by the tilling depth setter is not at the working machine lowering side.

0293478

11/5

FIG.1

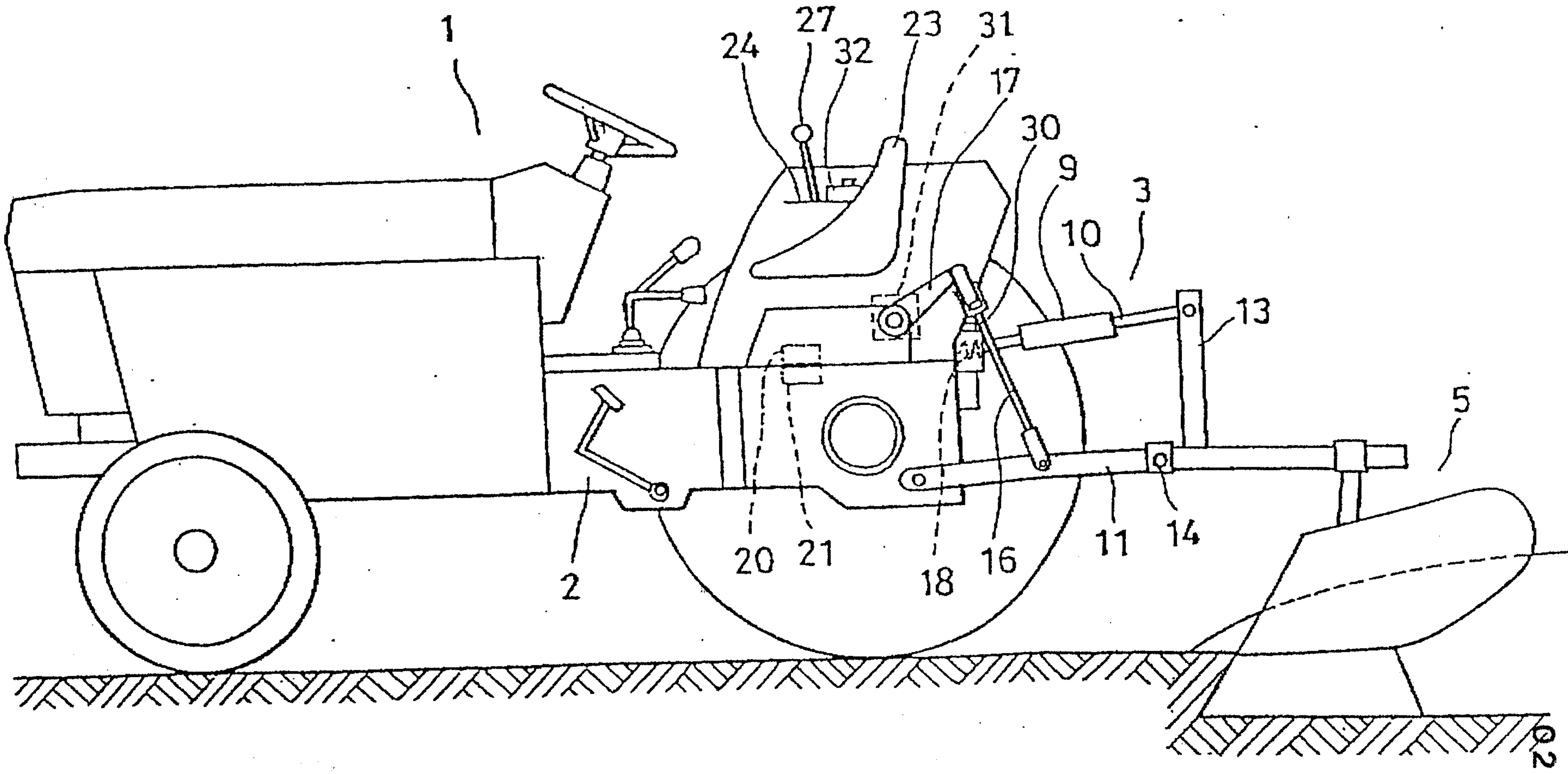

FIG. 2

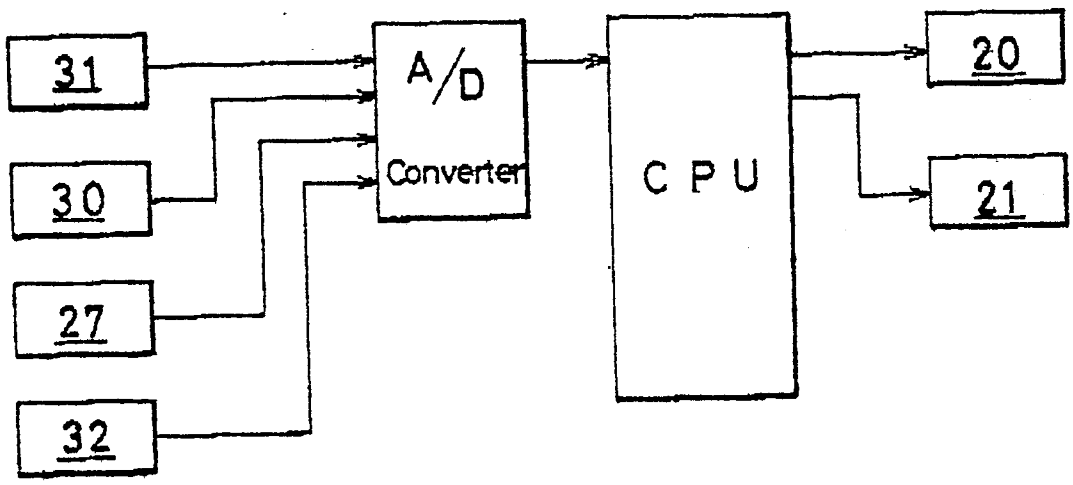
31
30
27
32
A/D
Converter
CPU
20
21

FIG.3

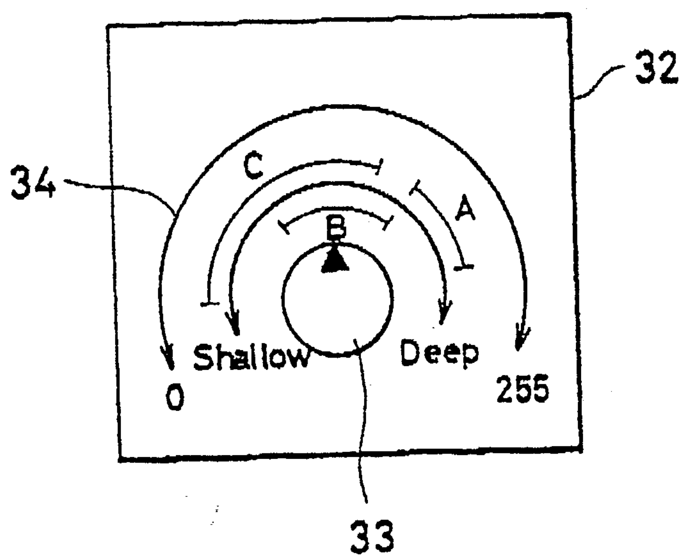
32
34
C
B
A
Shallow
Deep
0
255
33

FIG. 4

0293478

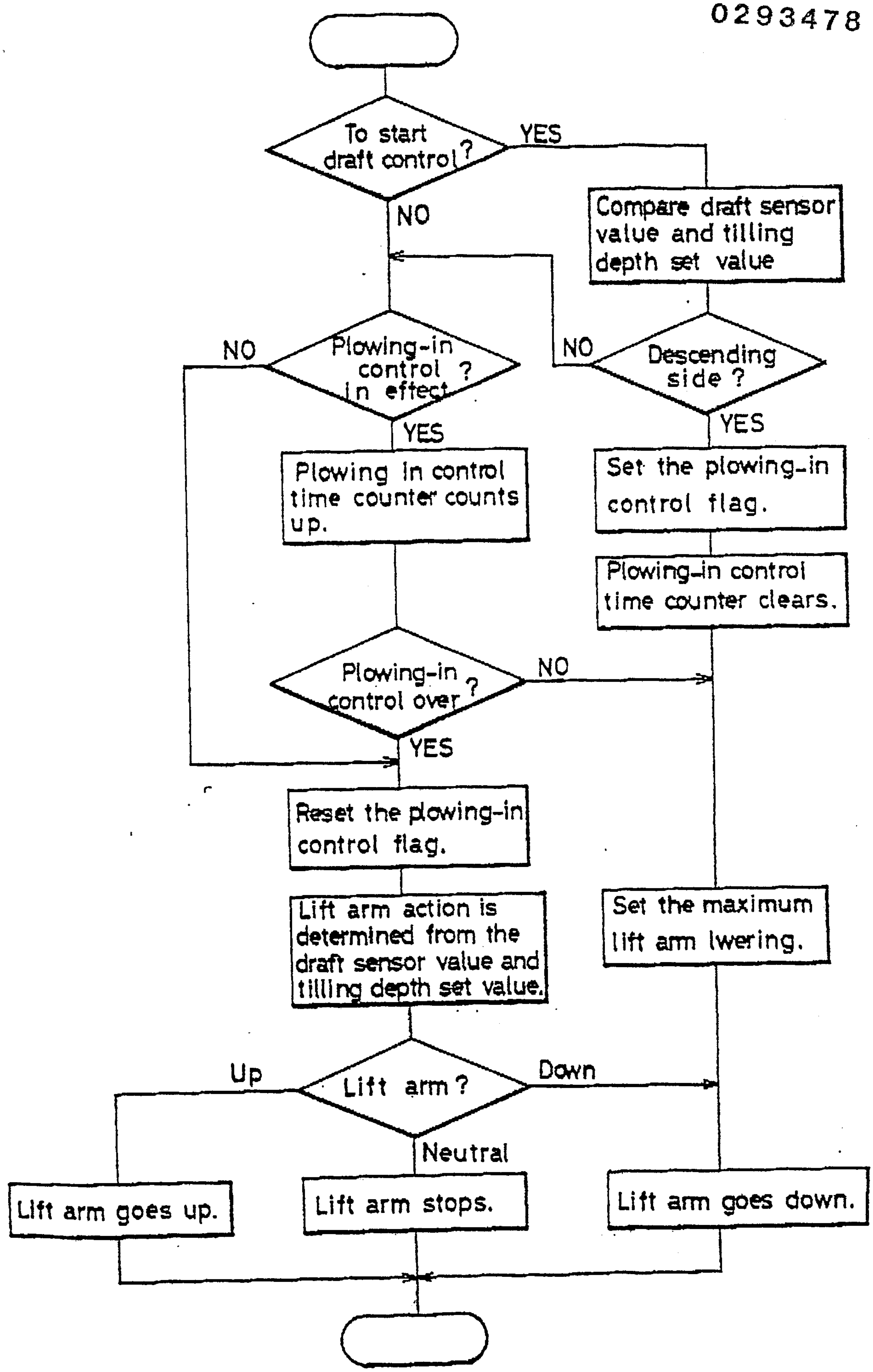

FIG.5

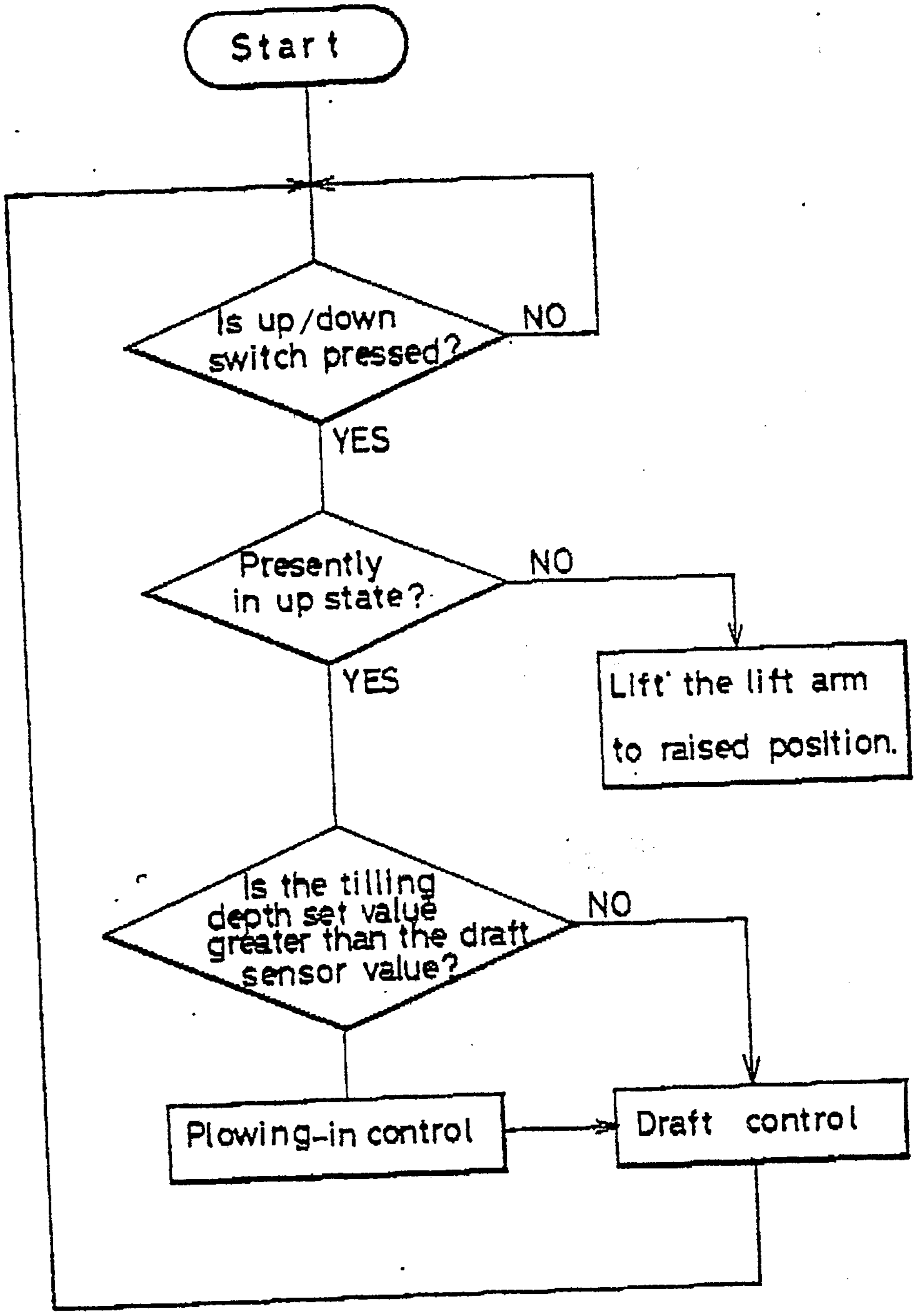
Start
Is up/down switch pressed?
NO
YES
Presently in up state?
NO
YES
Lift the lift arm to raised position.
Is the tilling depth set value greater than the draft sensor value?
NO
Plowing-in control
Draft control

FIG. 6

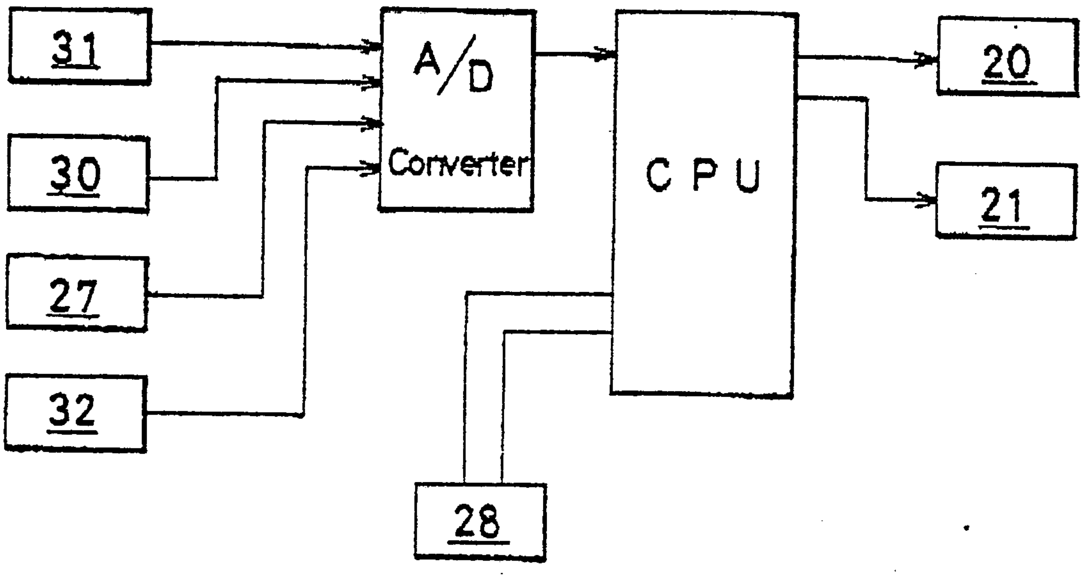

# INTERNATIONAL SEARCH REPORT

International Application No PCT/JP87/00835

**I. CLASSIFICATION OF SUBJECT MATTER** (if several classification symbols apply, indicate all) [3]

According to International Patent Classification (IPC) or to both National Classification and IPC

Int. $Cl^4$ A01B63/112

**II. FIELDS SEARCHED**

Minimum Documentation Searched [4]

| Classification System | Classification Symbols |
|---|---|
| IPC | A01B63/112 |

Documentation Searched other than Minimum Documentation to the Extent that such Documents are Included in the Fields Searched [5]

Jitsuyo Shinan Koho 1974 - 1986
Kokai Jitsuyo Shinan Koho 1973 - 1986

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| Y | JP, A, 58-43707 (Iseki & Co., Ltd.) 14 March 1983 (14. 03. 83) Page 2, column 2, line 18 to column 3, line 11 (Family: none) | 1 |
| Y | JP, Y2, 49-13446 (Iseki & Co., Ltd.) 3 April 1974 (03. 04. 74) Column 3, line 22 to column 4, line 13 (Family: none) | 1 |
| Y | JP, A, 54-35005 (Ishikawajima Shibaura Machinery Co., Ltd.) 14 March 1979 (14. 03. 79) Column 8, lines 8 to 20 (Family: none) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| January 5, 1988 (05. 01. 88) | January 25, 1988 (25. 01. 88) |
| **International Searching Authority** [1] | **Signature of Authorized Officer** [20] |
| Japanese Patent Office | |